# EUROPÄISCHE PATENTSCHRIFT

(11) **EP 3 161 378 B1**
(45) Veröffentlichungstag und Bekanntmachung des Hinweises auf die Patenterteilung: **12.02.2020**
(21) Anmeldenummer: 15790500.1
(22) Anmeldetag: 29.10.2015
(51) Int. Cl.: F22B 1/18, F22B 29/06, F22B 35/10, F22B 35/18, F22D 1/02

(54) **REGELUNGSVERFAHREN ZUM BETREIBEN EINES ABHITZEDAMPFERZEUGERS**
CONTROL METHOD FOR OPERATING A HEAT RECOVERY STEAM GENERATOR
PROCÉDÉ DE RÉGULATION DU FONCTIONNEMENT D'UN GÉNÉRATEUR DE VAPEUR À RÉCUPÉRATION DE CHALEUR

(30) Priorität: 06.11.2014 DE 102014222682
(43) Veröffentlichungstag der Anmeldung: 03.05.2017
(73) Patentinhaber: Siemens Aktiengesellschaft, 80333 München (DE)
(72) Erfinder: BRÜCKNER, Jan, 91080 Uttenreuth (DE); THOMAS, Frank, 91056 Erlangen (DE)
(86) Internationale Anmeldenummer: PCT/EP2015/075136
(87) Internationale Veröffentlichungsnummer: WO 2016/071204

(56) Entgegenhaltungen:
- EP-A2- 0 848 207
- EP-A2- 2 065 641
- WO-A2-2009/150055
- DE-A1-102010 042 458
- US-A1- 2005 284 346
- US-B1- 6 263 662

## Beschreibung

Die Erfindung betrifft ein Regelungsverfahren zum Betreiben eines Durchlaufdampferzeugers gemäß dem Oberbegriff des Anspruchs 1.

Entsprechende Regelungsverfahren zum Betreiben von Durchlaufdampferzeugern und insbesondere von Durchlaufdampferzeugern die als Abhitzedampferzeuger ausgelegt sind, sind aus der WO 2009/068446 A2 und der WO 2009/150055 A2 bekannt. Bei den hier beschriebenen Verfahren wird bei einem Durchlaufdampferzeuger mit einer Verdampferheizfläche ein Sollwert für den einzustellenden Speisewassermassenstrom vorgegeben.

Gerade in vertikalen Abhitzedampferzeugern können zur thermodynamischen Optimierung der Dampferzeugerschaltung Verdampfer zum Einsatz kommen, die im Rauchgaskanal aufgrund mindestens einer eingeschobenen, nicht zum Verdampfer zugehörigen Zwischenheizfläche in zwei oder mehrere Verdampferheizflächen aufgetrennt werden. Konkret bedeutet dies, dass das Rauchgas bezogen auf seinen Weg vom Verdampfereintritt bis zum Verdampferaustritt zusätzliche Heizflächen passieren muss, an denen es sich ebenfalls abkühlt. Somit reduziert sich die Rauchgastemperatur vom Eintritt bis zum Austritt des Verdampfers nicht ausschließlich nur durch die in den Verdampferheizflächen an ein strömendes Fluid übertragene Wärmeleistung, sondern auch durch die in den Zwischenheizflächen übertragene Wärmeleistung. Kommt nun aber die aus der WO 2009/068446 A2 oder der WO 2009/150055 A2 bekannte prädiktive Regelung des Speisewassermassenstroms bei solchen Dampferzeugerschaltungen mit eingeschobenen Zwischenheizflächen zum Einsatz, wird für den Verdampfer eine zu große Wärmeaufnahme ermittelt, da das Rauchgas ebenfalls an die eingeschobenen Heizflächen Wärme abgegeben hat und diese Wärmeabgabe aber nicht ausgewertet und berücksichtigt wird. Somit wird resultierend ein zu großer Sollwert für den Speisewassermassenstrom berechnet.

Aufgabe der Erfindung ist es, ein Verfahren bereitzustellen, das den zuvor beschriebenen Nachteil überwindet.

Diese Aufgabe wird mit dem Verfahren zum Betreiben eines Durchlaufdampferzeugers mit den Merkmalen des Anspruchs 1 gelöst.

Dadurch, dass für die zumindest eine eingeschobene Zwischenheizfläche die aktuelle Wärmeaufnahme ermittelt und von dem bilanzierten Verdampferwärmeeintrag der Verdampferheizflächen des Verdampfers subtrahiert wird, ergibt sich für die Regelung des Speisewassermassenstroms beziehungsweise der Speisewassermenge ein um die Wärmeaufnahme der eingeschobenen Zwischenheizfläche korrigierter Wert.

Eine vorteilhafte Ausführung des erfindungsgemäßen Regelungsverfahren besteht darin, im Rauchgaskanal weitere Rauchgastemperaturmesseinrichtungen am Ein- und Austritt der zumindest einen eingefügten Zwischenheizfläche zu installieren. So kann zu jedem beliebigen Zeitpunkt die exakte Wärmeaufnahme der zumindest einen, eingeschobenen Zwischenheizfläche ermittelt und bei der prädiktiven Regelung des Speisewassermassenstroms adäquat berücksichtigt werden. Allerdings steigt mit jeder zusätzlich installierten Rauchgastemperaturmesseinrichtung, die aus Redundanzgründen und zur Bildung eines geeigneten Mittelwerts zusätzlich auch noch in mehrfacher Ausfertigung zu installieren ist, der Aufwand. Dieser Aufwand steigt unter Umständen zudem umso stärker, je mehr Zwischenheizflächen zur Optimierung des thermodynamischen Designs rauchgasseitig zwischen Verdampfereintritt und Verdampferaustritt eingeschoben werden.

Eine besonders vorteilhafte Ausführung des erfindungsgemäßen Regelungsverfahrens besteht daher darin, dass für die Ermittlung der Wärmeaufnahme der zumindest einen, eingeschobenen Zwischenheizfläche eine wasserdampfseitige Bilanzierung angestrebt wird, so dass auf das vergleichsweise kostenintensive Equipment der zusätzlichen Rauchgastemperaturmesseinrichtungen möglichst verzichtet werden kann. Im direkten Vergleich sind die Messungen auf der Wasserdampfseite einfacher und kostengünstiger zu implementieren. Grundsätzlich ist es sogar denkbar, dass die eingeschobenen Zwischenheizflächen bereits aus anderen Gründen mit den erforderlichen wasserdampfseitigen Messungen versehen sind, so dass auf diese Messungen zurückgegriffen werden kann.

Die Erfindung soll nun anhand der nachfolgenden Figuren beispielhaft erläutert werden. Es zeigen:
- FIG 1: schematisch ein aus dem Stand der Technik bekanntes Regelverfahren,
- FIG 2: schematisch die erfindungsgemäße Erweiterung des Regelverfahrens,
- FIG 3: schematisch eine Ausführung der erfindungsgemäßen Erweiterung des Regelverfahrens

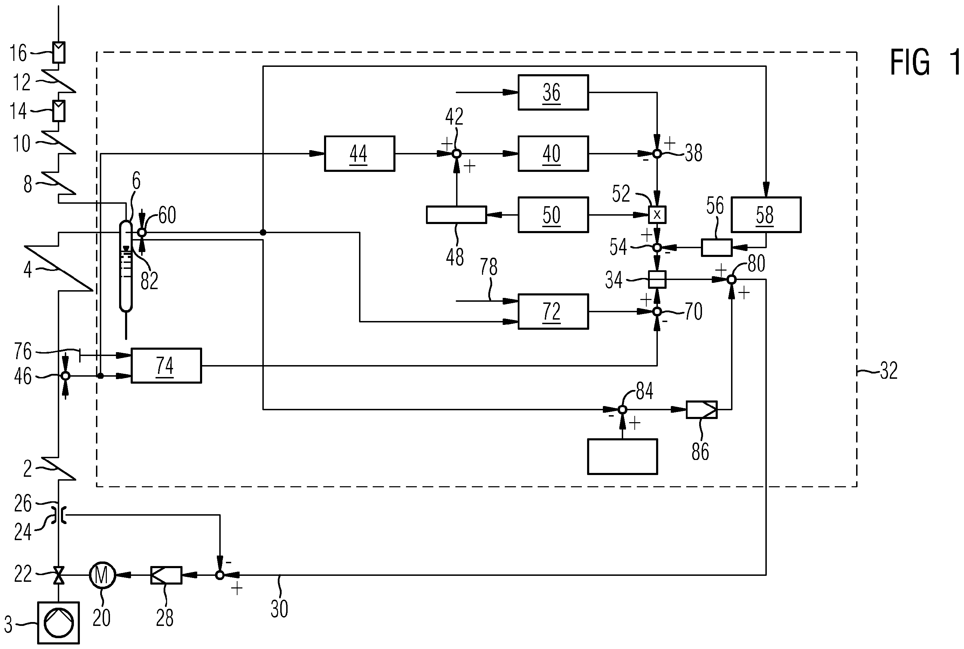

FIG 1 zeigt die aus der WO 2009/068446 A2 bekannte Regelung. Der Abhitzedampferzeuger weist hier im nicht näher dargestellten Rauchgaskanal einen auch als Economizer bezeichneten Vorwärmer 2 für als Strömungsmedium vorgesehenes Speisewasser auf. Dem Vorwärmer 2 ist strömungsmediumsseitig eine Speisewasserpumpe 3 vorgeschaltet und eine Verdampferheizfläche 4 nachgeschaltet. Ausgangsseitig ist die Verdampferheizfläche 4 strömungsmediumsseitig über einen Wasserspeicher 6, der insbesondere auch als Wasserabscheider oder Abscheideflasche ausgestaltet sein kann, mit einer Anzahl nachgeschalteter Überhitzerheizflächen 8, 10, 12 verbunden, die ihrerseits zur Anpassung der Dampftemperaturen und dergleichen mit Einspritzkühlern 14, 16 versehen sein können. Der Abhitzedampferzeuger ist für eine geregelte Beaufschlagung mit Speisewasser ausgelegt. Dazu ist der Speisewasserpumpe 3 ein von einem Stellmotor 20 angesteuertes Drosselventil 22 nachgeschaltet, so dass über geeignete Ansteuerung des Drosselventils 22 die von der Speisewasserpumpe 3 in Richtung des Vorwärmers 2 geförderte Speisewassermenge beziehungsweise der Speisewassermassenstrom einstellbar ist und damit geregelt wird. Zur Ermittlung eines aktuellen Kennwerts für den zugeführten Speisewasser-Massenstrom ist dem Drosselventil 22 eine Messeinrichtung 24 zur Ermittlung des Speisewassermassenstroms durch die Speisewasserleitung nachgeschaltet. Der Stellmotor 20 ist über ein Regelelement 28 angesteuert, das eingangsseitig mit einem über eine Datenleitung 30 zugeführten Sollwert für den Speisewassermassenstrom und mit dem über eine Messeinrichtung 24 ermittelten aktuellen Ist-Wert des Speisewassermassenstroms beaufschlagt ist. Durch Differenzbildung zwischen diesen beiden Signalen wird an den Regler 28 ein Nachführungsbedarf übermittelt, so dass bei einer Abweichung des Ist- vom Soll-Wert eine entsprechende Nachführung des Drosselventils 22 über die Ansteuerung des Motors 20 erfolgt.

Zur Ermittlung eines besonders bedarfsgerechten Soll-Werts für den Speisewassermassenstrom in der Art einer prädiktiven, vorausschauenden oder am zukünftigen oder aktuellen Bedarf orientierten Einstellung des Speisewassermassenstroms ist die Datenleitung 30 eingangsseitig mit einer zur Vorgabe des Soll-Werts für den Speisewassermassenstrom ausgelegten Speisewasserdurchflussregelung 32 verbunden. Diese ist dafür ausgelegt, den Soll-Wert für den Speisewassermassenstrom anhand einer Wärmestrombilanz in der Verdampferheizfläche 4 zu ermitteln, wobei der Soll-Wert für den Speisewassermassenstrom anhand des Verhältnisses aus dem aktuell in der Verdampferheizfläche 4 vom Heizgas auf das Strömungsmedium übertragenen Wärmestrom einerseits und einer im Hinblick auf den gewünschten Frischdampfzustand vorgegebenen Soll-Enthalpieerhöhung des Strömungsmediums in der Verdampferheizfläche 4 andererseits vorgegeben wird. Eine Nutzung eines derartigen Konzepts der Bereitstellung eines Soll-Werts für den Speisewassermassenstrom auf der Grundlage einer Wärmebilanz selbst für einen Abhitzedampferzeuger ist in dem vorliegenden Ausführungsbeispiel insbesondere dadurch erreicht, dass der vom Heizgas auf das Strömungsmedium übertragene Wärmestrom unter Berücksichtigung eines für die aktuelle Temperatur des Heizgases am Verdampfereintritt charakteristischen Temperaturkennwerts und eines für den aktuellen Massenstrom des Heizgases charakteristischen Massenstromkennwerts ermittelt wird.

Dazu weist die Speisewasserdurchflussregelung 32 ein Dividierglied 34 auf, dem als Zähler ein geeigneter Kennwert für den aktuell in der Verdampferheizfläche 4 vom Heizgas auf das Strömungsmedium übertragenen Wärmestrom und als Nenner ein im Hinblick auf den gewünschten Frischdampfzustand geeignet vorgegebener Kennwert für die gewünschte Soll-Enthalpieerhöhung des Strömungsmediums in der Verdampferheizfläche 4 zugeführt wird. Zählerseitig ist das Dividierglied 34 dabei eingangsseitig mit einem Funktionsmodul 36 verbunden, das anhand eines zugeführten, für die aktuelle Temperatur des Heizgases am Verdampfereintritt charakteristischen Temperaturkennwerts als Ausgangswert einen Wert für die Enthalpie des Heizgases am Verdampfereintritt ausgibt. Im Ausführungsbeispiel ist dabei die Zuführung eines für die aktuelle Temperatur des Heizgases am Verdampfereintritt charakteristischen Messwerts als Temperaturkennwert vorgesehen. Der für die Enthalpie des Heizgases am Verdampfereinlass charakteristische Kennwert wird auf ein Subtrahierglied 38 ausgegeben, wo von diesem Kennwert ein von einem Funktionsmodul 40 gelieferter Kennwert für die Enthalpie des Gases am Austritt des Verdampfers abgezogen wird.

Zur Ermittlung der Enthalpie des Heizgases am Verdampferauslass wird dem Funktionsglied 40 eingangsseitig von einem Summierglied 42 die Summe zweier Temperaturwerte gebildet. Dabei wird einerseits die über ein Funktionsglied 44, das eingangsseitig mit einem Drucksensor 46 verbunden ist, anhand des Drucks des Strömungsmediums beim Verdampfereintritt ermittelte Sättigungstemperatur des Strömungsmediums berücksichtigt. Andererseits wird über ein Funktionsglied 48, dem seinerseits eingangsseitig über ein weiteres Funktionsglied 50 ein für den aktuellen Massenstrom des Heizgases charakteristischer Massenstromkennwert zugeführt wird, nämlich die aus dem Massenstrom des Heizgases ermittelte Temperaturdifferenz der Heizgastemperatur am Verdampferaustritt minus der Siedetemperatur des Strömungsmediums am Verdampfereintritt, berücksichtigt. Aus diesen beiden über das Summierglied 42 addierten Temperaturbeiträgen wird vom Funktionsbaustein 40 somit die Enthalpie des Heizgases am Verdampferaustritt, gegebenenfalls unter Rückgriff auf geeignete Tabellen, Diagramme oder dergleichen, bereitgestellt. Ausgangsseitig liefert das Subtrahierglied 38 somit die Enthalpiedifferenz oder -bilanz des Heizgases, also die Differenz aus Heizgasenthalpie am Verdampfereintritt und Heizgasenthalpie am Verdampferaustritt.

Diese Enthalpiedifferenz wird an ein Multiplizierglied 52 weitergegeben, dem ebenfalls der charakteristische Massenstromkennwert, der im Übrigen als aktuell erfasster Messwert vorliegen kann, ebenfalls zugeführt wird. Ausgangsseitig liefert das Multiplizierglied 52 somit einen Kennwert für die vom Rauchgas an die Verdampferheizfläche 4 abgegebene Wärmeleistung.

Um anhand dieser vom Heizgas abgegebenen Wärmeleistung den tatsächlich auf das Strömungsmedium übertragenen Wärmestrom ermitteln zu können, ist zunächst noch eine Korrektur um Wärmeein- und/oder -ausspeichereffekte in die Komponenten der Verdampferheizfläche 4, insbesondere in die Metallmassen, vorgesehen. Dazu wird der genannte Kennwert für die vom Heizgas abgegebene Wärmeleistung zunächst einem Subtrahierglied 54 zugeführt, wo ein für die Wärmeein- oder -ausspeicherung in die Verdampferbauteile charakteristischer Korrekturwert abgezogen wird. Dieser wird von einem Funktionsglied 56 bereitgestellt. Dieses ist eingangsseitig seinerseits mit dem Ausgangswert eines weiteren Funktionsgliedes 58 beaufschlagt, indem ein mittlerer Temperaturwert für die Metallmassen der Verdampferheizfläche 4 ermittelt wird. Dazu ist das weitere Funktionsglied 58 eingangsseitig mit einem im Wasserspeicher 6 angeordneten Druckgeber 60 verbunden, so dass das weitere Funktionsglied 58 die mittlere Temperatur der Metallmassen anhand des Drucks des Strömungsmediums, z. B. durch Gleichsetzung mit der zu diesem Druck gehörigen Siedetemperatur, im Wasserspeicher 6 ermitteln kann.

Ausgangsseitig übergibt das Subtrahierglied 54 somit einen für die vom Heizgas abgegebene Wärmeleistung, vermindert um die in das Metall der Verdampferheizfläche 4 eingespeicherte Wärmeleistung, und somit einen für die im Verdampfer 4 an das Strömungsmedium abzugebende Wärmeleistung charakteristischen Kennwert.

Dieser Kennwert wird im Dividierglied 34 als Zähler verwendet, der dort durch einen Nenner geteilt wird, der einer im Hinblick auf den gewünschten Frischdampfzustand vorgegebenen Soll-Enthalpieerhöhung des Strömungsmediums in der Verdampferheizfläche 4 entspricht, so dass aus dieser Division oder diesem Verhältnis der Sollwert für den Speisewassermassenstrom gebildet werden kann. Zur Bereitstellung des Nenners, also des Kennwerts für die gewünschte Soll-Enthalpieerhöhung auf der Wasser-Dampf- oder Strömungsmediumsseite, ist das Dividierglied 34 eingangsseitig mit einem Subtrahierglied 70 verbunden. Dieses ist eingangsseitig mit einem von einem Funktionsglied 72 bereitgestellten Kennwert für den gewünschten Sollwert für die Enthalpie des Strömungsmediums am Verdampferaustritt beaufschlagt. Des Weiteren ist das Subtrahierglied 70 eingangsseitig mit einem von einem Funktionsmodul 74 bereitgestellten Kennwert oder Istwert für die aktuelle Enthalpie des Strömungsmediums am Verdampfereintritt beaufschlagt, der im Subtrahierglied 70 vom genannten Kennwert für den Sollwert der Enthalpie am Verdampferaustritt abgezogen wird. Eingangsseitig ist das Funktionsmodul 74 dabei zur Bildung des genannten Kennwerts für die Ist-Enthalpie am Verdampfereintritt mit dem Drucksensor 46 und mit einem Temperatursensor 76 verbunden. Durch die Differenzbildung im Subtrahierglied 70 wird somit die in Abhängigkeit vom gewünschten Frischdampfzustand in das Strömungsmedium in der Verdampferheizfläche 4 einzubringende Enthalpieerhöhung ermittelt, die als Nenner im Dividierglied 34 verwendet werden kann.

Bei der Ausgestaltung nach FIG 1 liefert das Dividierglied 34 anhand der genannten Division ausgangsseitig einen Sollwert für den Speisewassermassenstrom, der anhand der genannten Wärmebilanz ausgerichtet und ermittelt ist. Dieser Sollwert wird anschließend in einem nachgeschalteten Addierglied 80 aber noch um einen Korrekturwert korrigiert, der im vorliegenden Beispiel eine über den Speisewasserzufluss gewünschte Veränderung des Pegelstands im Wasserspeicher 6 wiedergibt. Dazu wird der Pegelstand im Wasserspeicher 6 über einen Füllstandssensor 82 erfasst. Dieser Istwert für den Füllstand wird in einem Subtrahierglied 84 von einem hinterlegten oder auf andere Weise vorgebbaren Sollwert für den Füllstand im Wasserspeicher 6 abgezogen. Anhand der dabei festgestellten Abweichung des Iststands des Füllstands im Wasserspeicher 6 vom zugeordneten Sollwert wird in einem nachfolgenden Stellglied 86 ein effektiver Speisewasser-Massenstromkorrekturwert ermittelt, der zu einer geeigneten Füllstandskorrektur im Wasserspeicher 6 verwendet werden soll. Dieser Korrekturwert wird im Addierglied 80 zum anhand der Wärmestrombilanz ermittelten Sollwert für den Speisewassermassenstrom hinzuaddiert, so dass als Sollwert für den Speisewassermassenstrom ein aus beiden Anteilen zusammengesetzter Wert ausgegeben wird.

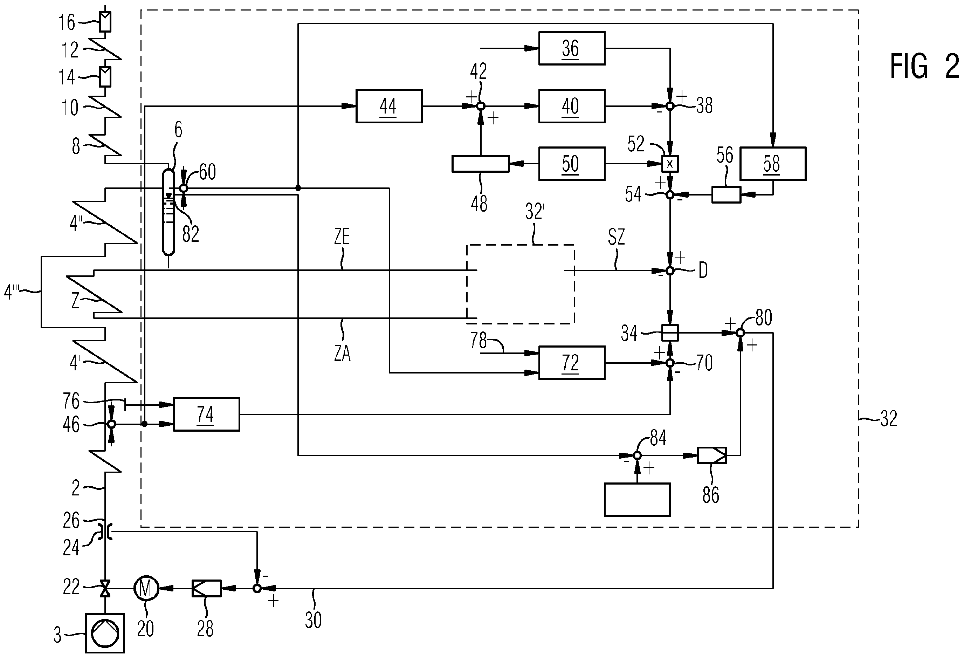

In FIG 2 ist nun die erfindungsgemäße Erweiterung zu der aus der WO 2009/068446 A2 bekannten und in FIG 1 gezeigten Anordnung und Regelung dargestellt. Die zuvor in FIG 1 dargestellte Heizfläche 4 wird hier durch einen Heizflächenverbund, bestehend aus einer ersten Verdampferheizfläche 4' und einer zweiten Verdamperheizfläche 4" welche über eine Verbindungsleitung 4"' strömungsmediumsseitig miteinander verbunden sind, ersetzt. Im vorliegenden Ausführungsbeispiel ist im Rauchgaskanal zwischen den beiden Verdampferheizflächen 4' und 4" nun eine einzige Zwischenheizfläche Z angeordnet, die auch vom Strömungsmedium durchströmt wird. Die Zwischenheizfläche Z kann dabei eine zusätzliche Economizerheizfläche sein, die wie der Economizer 2 auch von Speisewasser als Strömungsmedium durchströmt wird. Eine zusätzliche Regeleinheit 32' mit zusätzlichen - hier im Detail nicht nicht näher dargestellten - Messeinrichtungen im Bereich der Eintrittsrohre ZE und der Austrittsrohre ZA der Zwischenheizfläche Z ermittelt die Temperatur und/oder Druckwerte in diesen Bereichen, um so eine Wärmebilanz dieser Zwischenheizfläche Z zu ermitteln. Das Ausgangssignal SZ der Regeleinheit 32' wird dann an geeigneter Stelle in die bestehende Speisewasserdurchflussregelung 32 eingebunden. Im vorliegenden Ausführungsbeispiel erfolgt die Einbindung über ein zusätzliches Subtrahierglied D, das zwischen dem Subtrahierglied 54 und dem Dividierglied 34 eingefügt ist. Dabei wird über dieses zusätzliche Subtrahierglied D das Ausgangssignal, das einen Kennwert für die Wärmeaufnahme der Zwischenheizfläche Z darstellt, vom Ausgangssignal des Subtrahierglieds 54, das den im Verdampfer 4 an das Strömungsmedium abzugebende Wärmeleistung charakteristischen Kennwert darstellt, subtrahiert, bevor es als Eingangssignal dem Dividierglied 34 zugeführt wird. Somit kann die bilanzierte Wärmeaufnahme der Verdampferheizflächen 4' und 4" des Verdampfers durch die Wärmeaufnahme der eingeschobenen Zwischenheizfläche Z, reduziert werden und so ein an die konkrete Heizflächenanordnung angepasster Soll-Wert für den Speisewassermassenstrom vorgegeben werden.

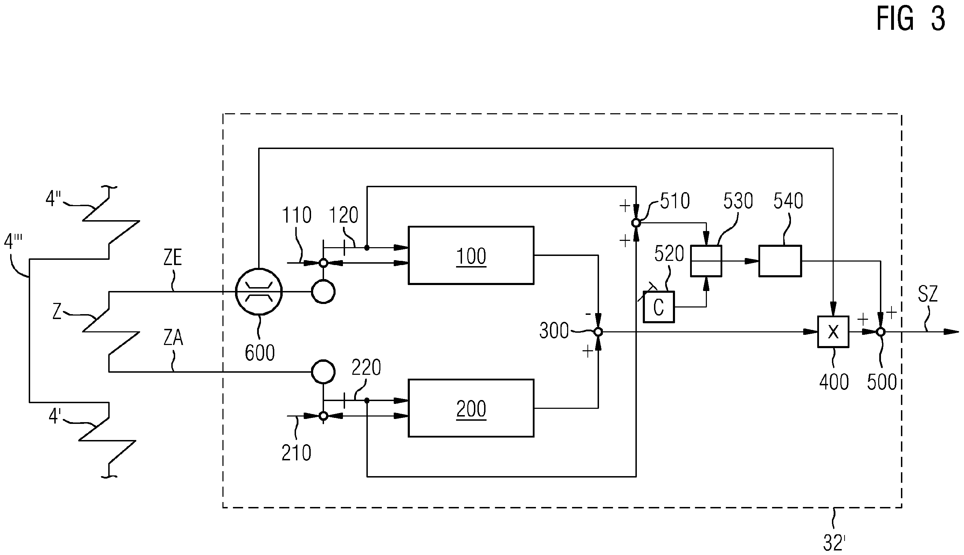

FIG 3 zeigt eine konkrete Ausbildung der in FIG 2 angedeuteten zusätzlichen Regeleinheit 32', bei der eine strömungsmediumsseitige Bilanzierung der zusätzlichen Zwischenheizfläche Z angestrebt wird. Hierfür ist die strömungsmediumsseitige Enthalpie am Ein- und Austritt der eingeschobenen Heizflächen 4' und 4" zu ermitteln. Dies geschieht vorzugsweise über die Umrechnung der über Drucksensoren 110, 210 und Temperatursensoren 120, 220 gemessenen Parameter Druck und Temperatur an diesen Stellen. Dadurch, dass die eingeschobenen Zwischenheizflächen Z in aller Regel zusätzliche Economizerheizflächen sind, wird das die Zwischenheizfläche Z durchströmende Strömungsmedium ein einphasiges Fluid sein. In den jeweiligen Funktionsmodulen 100 und 200 wird dann anhand der jeweiligen Parameter die entsprechende Eintritts- und Austrittsenthalpie der Zwischenheizfläche Z ermittelt. Dadurch, dass in einem Multiplizierglied 400 dann die mittels Subtrahierglied 300 errechnete Enthalpiedifferenz zwischen Aus- und Eintritt mit einem gemessenen Massenstrom 600 des Strömungsmediums multipliziert wird, ist die Wärmeaufnahme des Strömungsmediums in der eingeschobenen Zwischenheizfläche Z bekannt. Diese Wärmeaufnahme entspricht der Rauchgasabkühlung an der eingeschobenen Zwischenheizfläche Z und steht somit den Verdampferheizflächen 4' und 4" des Verdampfers nicht mehr zur Verfügung und ist demnach vom bilanzierten Verdampferwärmeeintrag abzuziehen.

Dabei ist zusätzlich noch zu berücksichtigen, dass bei Änderungen der Materialtemperatur der eingeschobenen Heizflächen thermische Ein- und Ausspeichereffekte der Rohrwand zu berücksichtigen sind. Steigt beispielsweise die Rohrwandtemperatur über der Zeit an, so geht ein Teil der vom Rauchgas an die Zwischenheizfläche abgegeben Wärme nicht in das Strömungsmedium sondern nur in die Rohrwand ein und erhöht deren Temperatur. Bezogen auf die aus der strömungsmediumsseitigen Bilanz ermittelte Wärmemenge der eingeschobenen Heizfläche, hat das Rauchgas eine größere Wärmemenge abgegeben, die nun der Verdampferheizfläche nicht mehr zur Verfügung steht. Bei einer Temperaturabsenkung des Rohrmaterials der eingeschobenen Heizfläche gilt das Umgekehrte. Die aufgrund thermischer Speichereffekte in die Rohrwand ein- oder ausgetragenen Wärmemengen sollten daher zur Berechnung der abgebauten Rauchgaswärme, die der Verdampferheizfläche nicht mehr zur Verfügung steht, berücksichtigt werden. Zur Berechnung der ein- und ausgespeicherten Wärmemengen ist daher vorzugsweise ein Korrekturwert zu ermitteln, der auf Basis der Änderung eines geeigneten Temperaturkennwerts der eingeschobenen Zwischenheizfläche Z zu ermitteln ist. Der Einfachheit halber geschieht dies in der Regel über ein Differenzierglied 540 erster Ordnung. Das Eingangssignal dieses Differenzierglieds kann generell unter Zuhilfenahme zusätzlicher Messungen oder auf Basis einer Mittelwertbildung der existierenden Temperaturen am Ein- und Austritt oder aber auch auf Basis zusätzlicher Informationen aus, z.B. thermodynamischen Nachrechnungen etc. ermittelt werden.

In FIG 3 wird das Eingangssignal des Differenzierglieds 540 über das arithmetische Mittel der beiden gemessenen Temperaturkennwerte 120 und 220 gebildet. Hierzu werden die beiden Temperaturkennwerte 120 und 220 im Addierer 510 aufsummiert und im folgenden Divisionsglied 530 durch die Konstante c (bereitgestellt durch das Konstantglied 520) dividiert. Für die Verwendung dieses arithmetischen Mittels wird ein lineares Temperaturprofil entlang des Strömungsweges in den Rohren der Zwischenheizfläche vorausgesetzt, so dass davon ausgegangen werden darf, dass der so gebildete Temperaturkennwert Änderungen der Materialtemperatur der Zwischenheizfläche während dynamischer Vorgänge ausreichend genau erfasst. Diese Änderungen werden dann über das Differenzierglied 540 in Bezug auf ein- und ausgespeicherte thermische Energie entsprechend ausgewertet, was bedeutet, dass das Differenzierglied 540 mit geeigneter Zeitkonstante und Verstärkung parametriert werden muss.

Die zuvor anhand der Figuren 1 bis 3 anhand einer Ausführungsform beschriebene erfindungsgemäße Erweiterung des Regelverfahrens kann auch auf die weiteren Ausführungsformen der WO 2009/068446 A2 und der WO 2009/150055 A2 angewandt werden.

## Patentansprüche

1. Regelungsverfahren zum Betreiben eines Abhitzedampferzeugers mit einem Rauchgaskanal in dem ein Verdampfer mit zumindest zwei im Rauchgaskanal nacheinander angeordneten Verdampferheizflächen (4',4") und zumindest eine zwischen den Verdampferheizflächen (4',4") angeordneten Zwischenheizfläche (Z) vorgesehen ist, wobei für die Verdampferheizflächen (4',4'') ein für die Wärmeaufnahme im Verdampfer und in der Zwischenheizfläche (Z) charakteristischer Kennwert ermittelt wird
**dadurch gekennzeichnet, dass** zusätzlich für die zumindest eine Zwischenheizfläche (Z) ein zusätzlicher Kennwert für die Wärmeaufnahme der Zwischenheizfläche (Z) ermittelt wird und dieser zusätzliche Kennwert von dem für die Wärmeaufnahme im Verdampfer und in der Zwischenheizfläche (Z) charakteristischen Kennwert abgezogen wird.

2. Regelungsverfahren nach Anspruch 1,
**dadurch gekennzeichnet, dass** die Wärmeaufnahme der zumindest einen Zwischenheizfläche (Z) anhand von Parametern des Rauchgases im Bereich eines Eintrittsrohres (ZE) und einem Austrittsrohr (ZA) der Zwischenheizfläche (Z) ermittelt wird.

3. Regelungsverfahren nach Anspruch 1 oder 2,
**dadurch gekennzeichnet, dass** die Wärmeaufnahme der zumindest einen Zwischenheizfläche (Z) anhand von Parametern eines die Zwischenheizfläche (Z) durchströmenden Strömungsmediums im Bereich eines Eintrittsrohres (ZE) und einem Austrittsrohr (ZA) der Zwischenheizfläche (Z) ermittelt wird.

## Claims

1. Control method for operating a heat recovery steam generator having a flue gas channel in which an evaporator, having at least two evaporator heating surfaces (4', 4'') arranged successively in the flue gas channel and at least one intermediate heating surface (Z) arranged between the evaporator heating surfaces (4', 4''), is provided, a characteristic value characteristic of the heat absorption in the evaporator and in the intermediate heating surface (Z) being determined for the evaporator heating surfaces (4', 4''),
**characterized in that**,
additionally for the at least one intermediate heating surface (Z), an additional characteristic value for the heat absorption of the intermediate heating surface (Z) is determined, and this additional characteristic value is subtracted from the characteristic value characteristic of the heat absorption in the evaporator and in the intermediate heating surface (Z).

2. Control method according to Claim 1,
**characterized in that**
the heat absorption of the at least one intermediate heating surface (Z) is determined with the aid of parameters of the flue gas in the region of an inlet tube (ZE) and an outlet tube (ZA) of the intermediate heating surface (Z).

3. Control method according to Claim 1 or 2,
**characterized in that**
the heat absorption of the at least one intermediate heating surface (Z) is determined with the aid of parameters of a flow medium, which flows through the intermediate heating surface (Z), in the region of an inlet tube (ZE) and an outlet tube (ZA) of the intermediate heating surface (Z).

## Revendications

1. Procédé de régulation pour le fonctionnement d'un générateur de vapeur à récupération de la chaleur perdue, comprenant un conduit pour le gaz de fumée, dans lequel est prévu un évaporateur ayant au moins deux surfaces (4', 4'') de chauffe d'évaporateur montées l'une derrière l'autre dans le conduit pour le gaz de fumée et au moins une surface (Z) de chauffe intermédiaire, disposée entre les surfaces (4', 4'') de chauffe d'évaporateur, dans lequel on détermine, pour les surfaces (4', 4'') de chauffe d'évaporateur, une valeur caractéristique de la chaleur absorbée dans l'évaporateur et dans la surface (Z) de chauffe intermédiaire,
**caractérisé en ce que**
on détermine, en plus, pour la au moins une surface (Z) de chauffe intermédiaire, une valeur caractéristique supplémentaire de la chaleur absorbée dans la surface (Z) de chauffe intermédiaire et on soustrait cette valeur caractéristique supplémentaire de la valeur caractéristique de la chaleur absorbée dans l'évaporateur et dans la surface (Z) de chauffe intermédiaire.

2. Procédé de régulation suivant la revendication 1,
**caractérisé en ce que**
on détermine la chaleur absorbée de la au moins une surface (Z) de chauffe intermédiaire à l'aide de paramètres du gaz de fumée, dans la région d'un tube (ZE) d'entrée et d'un tube (ZA) de sortie de la surface (Z) de chauffe intermédiaire.

3. Procédé de régulation suivant la revendication 1 ou 2,
**caractérisé en ce que**
l'on détermine la chaleur absorbée de la au moins une surface (Z) de chauffe intermédiaire à l'aide de paramètres d'un milieu en écoulement passant dans la surface (Z) de chauffe intermédiaire, dans la région d'un tube (ZE) d'entrée et d'un tube (ZA) de sortie de la surface (Z) de chauffe intermédiaire.
